# EUROPÄISCHE PATENTANMELDUNG

(11) **EP 3 474 578 A1**
(43) Veröffentlichungstag der Anmeldung: **24.04.2019**
(21) Anmeldenummer: 18201061.1
(22) Anmeldetag: 17.10.2018
(51) Int. Cl.: H04W 4/00, H04W 4/80

(54) **VERFAHREN UND SYSTEM FÜR EINEN SICHERHEITSSENSOR**

(30) Priorität: 18.10.2017 CH 12712017
(71) Anmelder: ELESTA GmbH, 7310 Bad Ragaz (CH)
(72) Erfinder: Steiner, Roman, 8725 Ernetschwil (CH); Geges, Norbert, 7324 Vilters (CH); Zöschg, Dietmar, 8824 Schönenberg (CH)
(74) Vertreter: Riederer Hasler & Partner Patentanwälte AG

(57) **Zusammenfassung**

Dargestellt und beschrieben ist Verfahren zur Übermittlung von Daten von einem RFID-Sender 1 zu einem RFID-Empfänger 2 wobei der RFID-Empfänger wiederholt überprüft, ob sich der RFID-Sender in seinem Empfangsbereich befindet und Steuerinformationen an ein Sicherheitskontrollgerät weitergibt.

Erfindungsgemäss ist vorgesehen, dass bei diesem Verfahren folgende Schritte ausgeführt werden, sofern das Prüfen ergibt, dass sich ein RFID-Sender im Empfangsbereich des RFID-Empfängers befindet: einlesen einer Identifikationsnummer des RFID-Senders in den RFID-Empfänger; einlesen von senderspezifischen Daten des RFID-Senders in den RFID-Empfänger; Verarbeitung der eingelesenen Daten.

Außerdem ist ein System insbesondere für die Durchführung des erfindungsgemäßen Verfahrens sowie ein Sicherheitssensor offenbart.

## Beschreibung

Die Erfindung betrifft ein Verfahren zur Übermittlung von einem RFID-Sender zu einem RFID-Empfänger sowie ein System insbesondere zur Durchführung des Verfahrens gemäss den Oberbegriffen der unabhängigen Ansprüche 1 und 11. Die Erfindung betrifft auch eine Sicherheitssensor nach dem Oberbegriff des Anspruchs 18.

Unter Sicherheitssensoren im Sinne der vorliegenden Erfindung sollen insbesondere Sensoren verstanden werden, die in der Art von Näherungssensoren, die Annäherung eines Gegenstands berührungslos detektieren können. Es ist bekannt hierfür sogenannte RFID (radio-frequency identification) - Elemente einzusetzen. Diese weisen einen meist passivem RFID-Sender, auch RFID-Tag genannt, und einem RFID-Empfänger auf, der oft auch als RFID-Lesegerät bezeichnet wird. Bei Annäherung des RFID-Senders an den RFID-Empfänger wird der RFID-Sender durch ein vom RFID-Empfänger ausgestrahltes elektromagnetisches Wechselfeld angeregt und mit Energie versorgt. Der Mikrocontroller des RFID-Senders ist dann in der Lage die vom RFID-Empfänger gesendeten Befehle zu decodieren und entsprechende Aktionen zu setzen, wie beispielsweise das Ausgeben seiner gespeicherten Information oder das Einschreiben von neuem Speicherinhalten.

Im einem praktischen Anwendungsfall werden derartige RFID-Elemente beispielsweise an Sicherheitstüren für Werkzeugmaschinen oder für Fertigungseinrichtungen mit Robotern verwendet. Bei solchen Maschinen ist eine Sicherheitsanforderung, dass sich während ihres Betriebes keine Person im Arbeitsbereich der Maschine befinden darf. Hierzu ist jener Bereich, in dem sich beispielsweise ein Maschinenführer zur Einrichtung, Justierung und Wartung der Maschine aufhalten muss durch Schutzwände umzäunt und der Zugang erfolgt über die genannten Sicherheitstüren. Diese Sicherheitstüren werden nun dadurch gesichert, dass an einem ersten Türelement ein RFID-Sender und an einem zweiten Türelement ein RFID-Empfänger angebracht wird. Ist die Sicherheitstüre geschlossen befindet sich der RFID-Sender im Empfangsbereich des RFID-Empfängers, RFID-Sender und RFID-Empfänger sind damit gekoppelt und ein Befehls- und Informationsaustausch ist möglich. Wird die Sicherheitstüre geöffnet, kann der RFID-Empfänger den RFID-Sender nicht mehr detektieren bzw. auslesen und der RFID-Empfänger kann dann eine entsprechende Information an eine übergeordnete Steuereinrichtung einer Maschine oder sonstigen Fertigungseinrichtung übermitteln, die verhindert, dass die Maschine anläuft und eine allenfalls im Gefahrenbereich befindlichen Person verletzt.

Für Sicherheitseinrichtungen dieser Art ist ein Sicherheitsintegrationslevel 3 (SIL3) einzuhalten, der unter anderem in der Norm IEC61508 definiert ist. Diese Einrichtungen haben eine zweifache Sicherheit zu gewährleisten, d.h. ein auftretender Fehler ist insofern redundant, als dass dies noch zu keiner Fehlfunktion der Sicherheitseinrichtung führt. Es ist daher beispielsweise bekannt, die vom Sicherheitssensor übermittelten Daten an zwei separate Datenverarbeitungseinheiten weiterzuleiten, die die von der Sensoreinheit stammenden Daten eigenständig prüfen. In der Folge vergleichen diese beiden Datenverarbeitungseinheiten ihre Prüfergebnisse und leiten insbesondere sicherheitsrelevante Informationen, wie beispielsweise die Information «Türe ist geschlossen» (was für eine übergeordnete Steuereinrichtung bedeutet, dass die Maschine anlaufen darf), nur dann an ein Sicherheitskontrollgerät bzw. an eine übergeordnete Steuereinrichtung einer Maschine weiter, wenn die Ergebnisse übereinstimmen.

Sicherheitssensoren in der Art der vorliegenden Erfindungen arbeiten vorzugsweise im Langwellenbereich, insbesondere mit einer 125 kHz Übertragungstechnologie. Hierbei kommt ein Protokoll, wie beispielsweise das HiTAG oder das HiTAGS Protokoll oder auch das Unique-Protokoll für RFID-Anwendungen zur Datenübertragung zum Einsatz, welches mehrere, insbesondere acht, Datensätze aufweist, wobei entsprechend den Konventionen dieses Protokolls der erste Datensatz eine eindeutige und unveränderliche Identifikationsnummer enthält. Die übrigen sieben Datensätze sind frei belegbar und können entsprechend dem Anwendungsfall angepasst und verwendet werden.

US 2003/0209601 offenbart ein System zum Verfolgen eines mit einem Smart-Tag verbundenen Artikels an einer Vielzahl von Stationen, an denen jeweils eine oder mehrere Operationen am Artikel ausgeführt werden. Jedes Smart-Tag, das einem Artikel zugeordnet ist, hat einen elektronischen Speicher und eine mit dem elektronischen Speicher gekoppelte Antenne zum Übertragen und / oder Empfangen informationstragender elektrischer Signale im Smart-Tag-Format. Eine Vielzahl von Smart-Tag-Lese- und Schreibgeräten ist mit jeder der Vielzahl von Stationen zum Bereitstellen und / oder Empfangen informationstragender elektrischer Signale assoziiert. Befindet sich das Smart-Tag im Erfassungsbereich einer bestimmten Station, können Informationen zwischen dem elektronischen Speicher des Smart-Tags und dem Smart-Tag-Leser übertragen werden. Zum Verarbeiten der von den Smart-Tag-Lesern empfangenen Informationssignalen ist mindestens ein Computer vorhanden.

Das Smart-Tag kann einen elektronischen Speicher mit verschiedenem Datenfeldern aufweisen, nämlich ein nicht löschbares Datenfeld mit einer permanenten Nummer des Smart-Tags, ein überschreibbares Datenfeld mit anwendungsspezifischen Daten und ein Datenfeld mit einer relationalen Prüfnummer, die mit jedem Schreiben anwendungsspezifischer Daten in jedes Smart-Tag geschrieben wird. Nach dem Übertragen der permanenten Nummer und der anwendungsspezifischen Daten kann eine Gegenprüfung vorgenommen, die Prüfnummer berechnet und mit der im Smart-Tag gespeicherten Prüfnummer verglichen werden. Wenn beide Prüfnummern übereinstimmen, dann kann mit hoher Sicherheit davon ausgegangen werden, dass die anwendungsspezifischen Daten keine Fehler enthalten oder verändert wurden. Wird hingegen eine Diskrepanz zwischen den Prüfnummern festgestellt, kann ein Alarm ausgelöst werden.

Bei Sicherheitssensoren besteht die Anforderung, dass erfasste senderspezifische Daten schnell an Sicherheitskontrollgeräte bzw. an Steuereinrichtungen von Maschinen weitergegeben werden können. Insbesondere soll die Weitergabe in einer Zeitspanne von garantiert weniger als 100 ms erfolgen.

Ein Problem ist, dass diese schnelle Weitergabe mit den am Markt befindlichen Lösungen nicht erreicht werden kann. Beim vorher erwähnten Protokoll dauert die Übertragung aller acht Datensätze in der Regel bis zu 240 ms.

Hier setzt die Erfindung an. Es ist Aufgabe der Erfindung ein Verfahren zur Übermittlung von Daten von einem RFID-Sender zu einem RFID-Empfänger sowie ein System insbesondere zur Durchführung dieses Verfahrens sowie einen Sicherheitssensor so weiter zu bilden, dass eine schnelle und sichere Datenübertragung gewährleistet ist. Die Regeln der vorbekannten RFID-Protokolle sollen dabei nicht verletzt werden, das heisst, dass die gesetzten Massnahmen mit den RFID-Protokollen kompatibel sein sollen. Gelöst wird diese Aufgabe durch ein Verfahren zur Übermittlung von Daten von einem RFID-Sender zu einem RFID-Empfänger mit den Merkmalen des Anspruchs 1 und mit einem System mit den Merkmalen des Anspruchs 11 insbesondere zur Durchführung dieses Verfahrens sowie mit einem Sicherheitssensor mit den Merkmalen des Anspruchs 18.

Bei dem erfindungsgemässen Verfahren zur Übermittlung von Daten von einem RFID-Sender zu einem RFID-Empfänger werden folgende Schritte ausgeführt, wenn eine wiederholte Prüfung durch den RFID-Empfänger ergibt, dass sich der RFID-Sender in dessen Empfangsbereich befindet:
- Einlesen einer Identifikationsnummer des RFID-Senders in den RFID-Empfänger,
- Einlesen von senderspezifischen Daten des RFID-Senders in den RFID-Empfänger,
- Verarbeitung der eingelesenen Daten.

Durch das Einlesen der Identifikationsnummer des Sicherheitssensors im ersten Schritt und durch das Einlesen der senderspezifischen Daten im zweiten Schritt, kann sichergestellt werden, dass immer aktuelle senderspezifische Daten eingelesen werden, weil sich senderspezifische Daten und Identifikationsnummer unterscheiden und somit zwei unterschiedliche Datensätze vorliegen. Dadurch kann erkannt werden, wenn durch einen Fehler der Speicherinhalt hängen bleibt, sich also nicht mehr ändert bzw. wenn der Speicher nicht oder nicht mehr richtig beschrieben wird. Dass diese Fehlererkennung möglich ist, wird deutlich, wenn man sich vor Augen hält, dass die Verfahrensschritte gemäss Anspruch 1 mehrfach hintereinander durchlaufen werden. Hierdurch wird abwechselnd der Speicher mit der Identifikationsnummer und mit den senderspezifischen Daten beschrieben. Somit kann auf einen Fehler geschlossen werden, wenn sich der Speicherinhalt nicht regelmässig beim Durchlaufen der Verfahrensschritte ändert. Somit wird durch das kontinuierliche und alternierende Übermitteln der zwei verschiedenen Datensätze eine Datendynamik erzeugt, die sicherstellt, dass die Senderlogik sowie die Empfängerlogik nicht blockiert, die senderspezifischen Daten immer frisch eingelesen sind und nicht in irgend einem Speicher feststecken.

Vorteilhafte Ausgestaltungen des erfindungsgemässen Verfahrens werden in den abhängigen Ansprüchen 2 bis 4 umschrieben.

In der vorteilhaften Ausgestaltung der Erfindung gemäss Anspruch 2 wird beim Einlesen der senderspezifischen Daten in den RFID-Empfänger die vorher im RFID-Empfänger eingelesene Identifikationsnummer (100) überschrieben. Bevorzugt wird dann vor der Verarbeitung der eingelesenen senderspezifische Daten geprüft wird, ob eine Änderung des Speicherinhaltes stattgefunden hat und wenn diese Prüfung ergibt, dass dies nicht der Fall ist, kann eine Fehlermeldung insbesondere an das Sicherheitskontrollgerät ausgegeben werden.

Bei der Verarbeitung der gelesenen Daten werden vorzugsweise Steuerinformationen für das Sicherheitskontrollgerät erzeugt und diese Steuerinformationen werden dann an das Sicherheitskontrollgerät weitergleitet. Hinsichtlich der Steuerinformation ist festzuhalten, dass vom RFID-Empfänger durchaus die geprüften bzw. plausibilisierten senderspezifischen Daten gegebenenfalls mit der Identifikationsnummer an das Sicherheitskontrollgerät als Steuerinformationen weitergeleitet werden können und dass dann das Sicherheitskontrollgerät gemäss der eigenen internen Ablaufsteuerung diese verarbeitet oder bewertet und entsprechende Massnahmen veranlasst. Ebenso ist denkbar, dass das Ergebnis der Verarbeitung eine Steuerinformation im Sinne einer Ja/Nein Freigabe-Information ist, die weitergeben wird und dann unmittelbar vom Sicherheitskontrollgerät in entsprechende Massnahmen umgesetzt wird. Grundsätzlich ist die Aufgabe des Sicherheitskontrollgerätes, die Steuerinformationen zu empfangen und zu verarbeiten und dementsprechende Informationen und Befehle an ein übergeordnetes System oder eine übergeordnete Steuereinrichtung weiter zu leiten.

Um Fehler insbesondere bei der Übertragung oder beim Empfang der senderspezifische Daten zu erkennen, kann vor der Verarbeitung der eingelesenen senderspezifischen Daten oder der Weitergabe der Steuerinformationen an ein Sicherheitskontrollgerät eine Plausibilisierung der eingelesenen senderspezifischen Daten mit einer zyklischen Redundanzprüfung vorgesehen werden, wobei im Falle der Plausibilität der eingelesenen senderspezifischen Daten die Verarbeitung und Weiterleitung der eingelesenen senderspezifischen Daten oder von Steuerinformationen an das Sicherheitskontrollgerät erfolgt. Im Falle nicht gegebener Plausibilität der senderspezifischen Daten erfolgt die Ausgabe einer Fehlermeldung an das Sicherheitskontrollgerät.

In einer bevorzugten Ausführungsform der Erfindung wird ein vorbekanntes RFID-Protokoll verwendet, welches mehrere, insbesondere acht, Datensätze aufweist und der erste Datensatz die Identifikationsnummer enthält. Diese Identifikationsnummer wird bei jedem RFID-Sender standardmässig einprogrammiert und wird nicht mehr verändert. Die Identifikationsnummer ist einzigartig und stellt somit eine eindeutige Möglichkeit der Identifikation dar.

Erfindungsgemäss werden bevorzugt nur in einem weiteren der acht Datensätze senderspezifische Daten abgelegt. Vorzugsweise wird hierzu der vierte Datensatz verwendet. Weiters werden nun gemäss der Ausführungsform nach Anspruch 3 abwechselnd die Identifikationsnummer und die senderspezifischen Daten eingelesen. Da erfindungsgemäss nun nicht mehr alle acht Datensätze sondern nur noch zwei Datensätze eingelesen werden, ist die Geschwindigkeit des Lesevorgangs deutlich höher als bei vorbekannten Systemen, bei denen alle Datensätze des RFID-Protokolls genutzt werden.

In einer weiteren Ausführungsform wird zur Berechnung des Prüfwerts für die zyklische Redundanzprüfung eine Kombination aus senderspezifischen Daten und Identifikationsnummer verwendet. Hierdurch wird sichergestellt, dass sowohl die senderspezifischen Daten als auch die Identifikationsnummern plausibilisiert werden können, bevor sie weiter verarbeitet werden. Unter Plausibilisierung wird verstanden, dass der Prüfwert, auch Check-Summe genannt, mit den senderspezifischen Daten und ggf. gemeinsam mit der Identifikationsnummer in Beziehung gesetzt wird, um zu überprüfen, ob die empfangenen Daten mit den gesendeten Daten übereinstimmen. Die Verfahren zur zyklischen Redundanzprüfung sind bekannt, insbesondere wird bei der vorliegenden Erfindung das CRC8-Verfahren benutzt. Von Vorteil ist hierbei, dass bei der Bildung der Check-Summe sowohl die an sich veränderbaren senderspezifischen Daten und die nicht veränderbare Identifikationsnummer kombiniert werden. Hierdurch ist ein zusätzlicher Manipulationsschutz gegeben, weil zwar die senderspezifischen Daten verändert bzw. manipuliert werden könnten, die Identifikationsnummer aber nicht. Stimmt die Check-Summe der gesendeten mit den empfangen Daten überein, kann folglich daraus mit höchster Sicherheit geschlossen werden, dass die empfangenen Daten richtig und damit plausibel sind.

In einer besonders bevorzugten Ausführungsform werden die senderspezifischen Daten vorzugsweise gleichzeitig an wenigstens zwei Datenverarbeitungseinheiten übertragen. Hierbei ist wesentlich, dass jede dieser Datenverarbeitungseinheiten für sich eigenständig die Plausibilität der senderspezifischen Daten prüft. Um eine hohe Redundanz sicherzustellen, sind die Datenverarbeitungseinheiten zwar hinsichtlich ihrer Funktion identisch, aber hinsichtlich ihrer hardwaremässigen Realisierung vorzugsweise unterschiedlich.

Hierdurch ergeben sich weitere Prüfmöglichkeiten, weil die Ergebnisse der Plausibilitätsprüfungen der beiden Datenverarbeitungseinheiten miteinander verglichen werden können und bei fehlender Übereinstimmung eine Fehlermeldung an das Sicherheitskontrollgerät ausgegeben werden kann. Stimmen die Ergebnisse der Plausibilitätsprüfungen der beiden Datenverarbeitungseinheiten miteinander überein, können die senderspezifischen Daten oder eine entsprechende Steuerinformation an ein Sicherheitskontrollgerät ausgegeben werden.

Es sei vermerkt, dass unter senderspezifischen Daten veränderbare Daten verstanden werden, die wenigstens eine Sendertyp-ID, die Informationen zur Gerätekonfiguration enthält, und eine senderspezifische-ID umfassen, die an sich nur eine Nummer zur Identifikation darstellt. Weiters können in den senderspezifischen Daten ein Prüfwert für die zyklische Redundanzprüfung und eine RFID-protokollspezifische Information für die Unterscheidung zwischen erstem Datensatz bzw. der Identifikationsnummer und dem weitern Datensatz bzw. den senderspezifische Daten enthalten sein.

Die senderspezifische-ID stellt eine Nummer zur Identifikation dar. Diese Nummer muss nicht zwingend eindeutig sein. Ausserdem kann mit der Nummer eine Eigenschaft des Senders verbunden werden, d.h. es könnte beispielsweise anlagenspezifisch oder herstellerspezifisch ein Nummernbereich für Sensoren für Türen oder für Sensoren für die Werkzeugerkennung durch Roboter definiert werden. Beispielsweise könnte mit der Werkzeugerkennung eine Eigenschaft verbunden sein, die den zulässigen Bewegungsspielraum für einen Roboterarm definiert, wenn ein bestimmtes Werkzeug aufgenommen wurde.

Die Sendertyp-ID stellt eine Information über die Gerätekonfiguration dar. Hierbei kann beispielsweise unterschieden werden zwischen Schubladen, Türen oder Werkzeugen oder ob ein oder mehrere Sender im Empfangsbereich eines Empfängers erlaubt sind.

Die vorliegende Erfindung betrifft auch ein System mit einem Sicherheitssensor und einem Sicherheitskontrollgerät, wobei der Sicherheitssensor einen RFID-Empfänger zur Detektion eines RFID-Senders umfasst und der RFID-Empfänger wenigstens eine Datenverarbeitungseinheit aufweist, insbesondere zur Durchführung des Verfahrens nach einem der Ansprüche 1-4, wobei erfindungsgemäss in einem Speicher des RFID-Senders eine Identifikationsnummer des RFID-Senders und senderspezifische Daten abgelegt sind, und der RFID-Empfänger oder die Datenverarbeitungseinheit dazu ausgelegt ist, abwechselnd zuerst die Identifikationsnummer und dann die senderspezifischen Daten abzufragen und diese Nummer und diese Daten abwechselnd im selben Speicherplatz des RFID-Empfängers oder der Datenverarbeitungseinheit zu speichern.

Vorteilhafte Ausführungsformen dieses Systems sind in den Ansprüchen 6 bis 9 beschrieben. Um Datenkonsistenz und Manipulationsschutz sicherzustellen sind in einer ersten Ausführungsform bevorzugt die Identifikationsnummer und die senderspezifischen Daten Basis zur Berechnung eines Prüfwerts für eine zyklische Redundanzprüfung. Insbesondere bei der Übertragung von senderspezifischen Daten mit einem RFID Protokoll, welches mehrere, insbesondere acht, Datensätze aufweist, wobei der erste Datensatz die Identifikationsnummer enthält, sind vorzugsweise in einem weiteren Datensatz, insbesondere im vierten Datensatz, die senderspezifischen Daten abgelegt.

In einer weiteren bevorzugten Ausführungsform sind die senderspezifischen Daten des weiteren Datensatzes aus einer Bitfolge gebildet, die einen ersten Bereich für den Prüfwert, einen zweiten Bereich für die Senderidentitätsdaten und einen dritten Bereich für RFID-protokollspezifische Informationen aufweisen. Der erste Bereich kann bevorzugt 8 Bits, der zweite Bereich 23 Bits und der dritte Bereich 1 Bit umfassen.

Um die Bitfolge zu verschlüsseln, enthalten die Senderidentitätsdaten im zweiten Bereich eine Sensortyp-ID und eine Sensorspezifische- ID, wobei die Sensortyp-ID eine erste Anzahl von Bits und die Sensorspezifische-ID einen zweite Anzahl von Bits aufweist, wobei die Bits der beiden IDs vorzugsweise derart über den zweiten Bereich verteilt sind, dass neben einem Bit der Sensortyp-ID wenigstens ein Bit der sensorspezifischen-ID oder des ersten oder dritten Bereichs liegt. Dies stellt eine bevorzugte Verteilung der Bits dar, es erklärt sich aber von selbst, dass diese Verteilung auch anderes gewählt werden kann. Da ein Aussenstehender nicht ohne weiteres diese Verteilung der Bits nachvollziehen kann, stellt das Vorsehen einer Verteilung der Bits eine Verschlüsselung dar, die gegebenenfalls von Zeit zu Zeit oder anlagenspezifisch veränderbar ist.

Die vorliegende Erfindung betrifft weiters einen Sicherheitssensor, wobei der Sicherheitssensor einen RFID-Empfänger mit einer Datenverarbeitungseinheit zum Einlesen der in einem Speicher eines RFID-Senders gespeicherten Daten in den RFID-Empfänger aufweist, wobei erfindungsgemäss im Speicher des RFID-Senders eine Identifikationsnummer des RFID-Senders sowie senderspezifische Daten abgelegt sind, und die Datenverarbeitungseinheit dazu ausgelegt ist, abwechselnd zuerst die Identifikationsnummer und dann die senderspezifischen Daten einzulesen und diese abwechselnd im selben Speicherplatz des RFID-Empfängers oder der Datenverarbeitungseinheit zu speichern.

Durch das Einlesen der im Speicher abgelegten Identifikationsnummer des Sicherheitssensors und durch das anschliessende Einlesen der senderspezifischen Daten, kann sichergestellt werden, dass immer aktuelle senderspezifische Daten eingelesen werden, weil sich senderspezifische Daten und Identifikationsnummer unterscheiden. Weil somit zwei unterschiedliche Datensätze vorliegen, können Speicherfehler - wie zuvor beim Verfahren erläutert - erkannt werden.

Insbesondere um hohe Sicherheitsstandards gemäß der Norm IEC61508 erfüllen zu können, ist es von Vorteil, wenn die senderspezifischen Daten von wenigstens zwei Datenverarbeitungseinheiten eingelesen werden, und jede dieser Datenverarbeitungseinheiten für sich eigenständig die Plausibilität der senderspezifischen Daten oder wenigstens Senderidentitätsdaten prüft.

Vorteilhafte Ausgestaltungen des Sicherheitssensors sind in den abhängigen Ansprüchen 11 bis 15 beschrieben. Diese Ansprüche betreffend den erfindungsgemässen Sicherheitssensor sind in analoger Form zu den Verfahrensansprüchen bzw. den Systemansprüchen formuliert. Hinsichtlich ihrer Vorteile und Wirkungsweise wird daher auf die entsprechenden vorigen Ausführungen verwiesen.

Die zuvor angeführten vorteilhaften Ausführungsvarianten führen allein oder in Kombination miteinander zu weiteren Verbesserungen des erfindungsgemässen Verfahrens, des erfindungsgemässen Systems und des erfindungsgemässen Sicherheitssensors. Weitere Vorteile und Merkmale der Erfindung ergeben sich aus der nachfolgenden Beschreibung der Erfindung unter Bezugnahme auf schematische Darstellungen.

Insbesondere gelingt es mit dem erfindungsgemässen Verfahren, mit dem erfindungsgemässen System und mit dem erfindungsgemässen Sicherheitssensor Daten mit der 125kHz Übertragungstechnologie unter 100 ms zu übermitteln, wobei zufällige Fehler bei der Übermittlung der senderspezifischen Daten oder der Identifikationsnummer und zufällige Fehler in der Übermittlungshardware ausgeschlossen werden können. Ausserdem kann ausgeschlossen werden, dass andere RFID-Sendequellen akzeptiert werden. Die Erfindung bietet ausserdem einen Manipulationsschutz sowie eine Kopierschutz hinsichtlich des RFID-Senders.

Es zeigen:
- Figur 1:: eine Blockschaltbild eines erfindungsgemässen Systems;
- Figur 2:: eine Darstellung eines RFID-Protokolls;
- Figur 3:: Ein Ablaufdiagramm eines erfindungsgemässen Verfahrens.

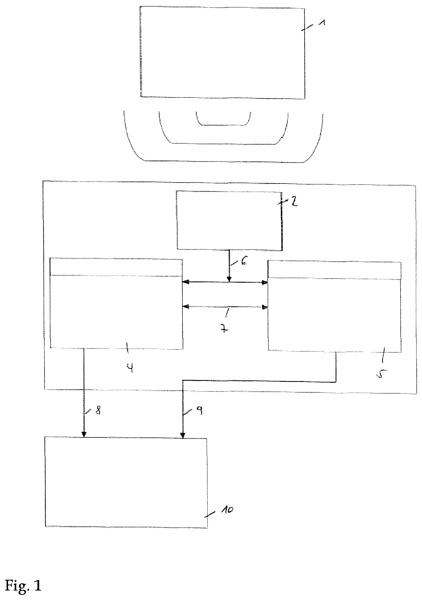

Die Figur 1 zeigt ein Blockschaltbild eines erfindungsgemässen Systems mit einem RFID-Sender 1, der einen nicht dargestellten Speicher enthält zum Ablegen einer Identifikationsnummer und von senderspezifischen Daten und einen RFID-Empfänger 2. Wird der RFID-Sender 1 in die Nähe des RFID-Empfängers 2 gebracht, wird der RFID-Sender 1 vom elektrischen Wechselfeld, welches der RFID-Empfänger 2 ausstrahlt, angeregt. Der nicht dargestellte interne Microcontroller des RFID-Senders 1 wird mit elektrischer Energie versorgt und der RFID-Sender 1 ist in der Lage auf Befehle des RFID-Empfängers 2 zu reagieren und beispielsweise eine senderspezifische-ID in den Speicher zu schreiben. Ausserdem kann der RFID-Empfänger 2 den Speicher des RFID-Senders 1 auslesen und diese Daten intern speichern und mittels der eigenen Datenverarbeitungseinheit verarbeiten.

Im Ausführungsbeispiel gemäss Figur 1 sind dem Empfängerteil des RFID-Empfängers 2 zwei Datenverarbeitungseinheiten 4 und 5 nachgeschaltet. Diesen beiden Datenverarbeitungseinheiten 4, 5 werden abwechselnd über jeweils den Übertragungsweg 6 eingelesene senderspezifische Daten und eine Identifikationsnummer zugeführt. Jede der Datenverarbeitungseinheiten 4, 5, die sich in der Ausführung ihrer Hardware unterscheiden, führt eine zyklische Redundanzprüfung durch, um zu prüfen, ob die zugeführten Daten konsistent sind. Die beiden Datenverarbeitungseinheiten 4 und 5 führen einen Datenabgleich insbesondere für das Prüfungsergebnis durch und leiten die senderspezifischen Daten über vorzugsweise einen separaten zweiten und einen separaten dritten Übertragungsweg 8, 9 an ein Sicherheitskontrollgerät 10 weiter. Auch im Sicherheitskontrollgerät kann verglichen werden, ob beide Datenverarbeitungseinheiten 4, 5 gleiche Daten weitergegeben haben. In der Regel leitet das Sicherheitskontrollgerät jedoch entsprechend seiner internen Ablaufsteuerung die empfangenen Daten oder die daraus abgeleiteten Befehle an eine übergeordnete Steuereinrichtung oder ein übergeordnetes System weiter. Zur Beschleunigung der Datenausgabe kann eine Verbindung 7 vorgesehen sein, welche die beiden Datenverarbeitungseinheiten 4, 5 verbindet. Über diese Verbindung 7 teilen sich die beiden Datenverarbeitungseinheiten nur Ausnahmen, also insbesondere die Erkennung eines Fehlers mit. Geschieht so eine Mitteilung, so wird unmittelbar danach von den Datenverarbeitungseinheiten eine entsprechende Fehlerinformation zum Sicherheitskontrollgerät weiter geleitet.

Ein solches übergeordnetes System kann eine Sicherheitstüre sein, welche den Zugang zum Arbeits-, Wartungs-, oder Installationsbereich einer Werkzeugmaschine oder einer Fertigungseinrichtung absichert. Insbesondere soll verhindert werden, dass sich ein Maschinenführer oder Wartungspersonal im Gefahrenbereich solcher Maschine oder Einrichtungen befindet, wenn diese Anlaufen, weil die Gefahr besteht, dass dadurch der Maschinenführer oder das Wartungspersonal verletzt werden könnte.

Es sei vermerkt, dass das hier beschriebene Verfahren, das hier beschriebene System und der hier beschriebene Sicherheitssensor immer in Zusammenhang mit Sicherheitstüren für Maschinen und Fertigungseinrichtungen beschrieben wurde. Es versteht sich von selbst, dass die erfindungsgemässe Lösungen für das Verfahren, System und den Sicherheitssensor auch auf anderen Gebieten eingesetzt werden kann, bei denen eine Annäherung einer Komponente an eine andere detektiert werden muss. Beispielsweise könnte die Erfindung bei Schubladen (z.B.: prüfen, ob diese offen oder geschlossen ist) oder bei Roboterarmen (z.B.: prüfen, ob eine ungewollte Annäherung an eine stationären Anlagenteil oder als Mittel zur Werkzeugidentifikation) zur Anwendung gelangen.

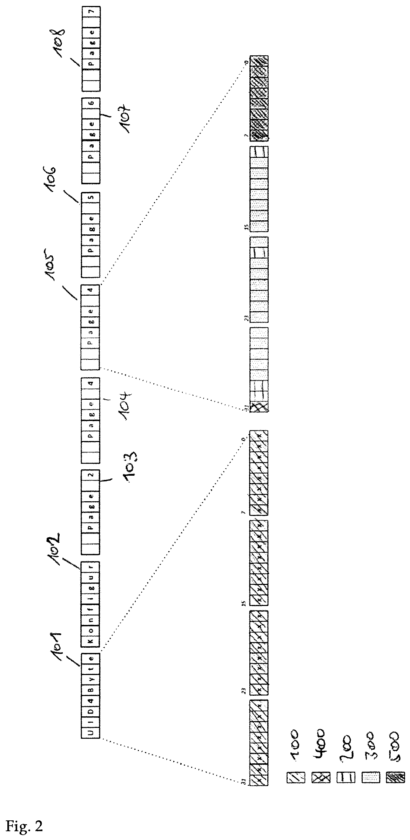

In Figur 2 ist schematisch ein RFID-Protokoll dargestellt. Dieses Protokoll besteht in vorbekannter Weise aus acht Datensätzen 101 bis 108, wobei erfindungsgemäss nur die Datensätze 101 und 105 verwendet werden. Hierbei ist im ersten Datensatz 101 eine Identifikationsnummer gespeichert, die einzigartig ist. Diese Identifikationsnummer wird in einem RFID-Standard, nämlich dem Standard Unique-Protokoll, auch als Unique ID bezeichnet und besteht aus 4 Bytes, die jeweils acht Bit lang sind.

Der vierte Datensatz 105 besteht ebenfalls aus 32 Bits, wobei die Bits 0 bis 7 einen Prüfwert, auch Check-Summe genannt, der zyklischen Redundanzprüfung darstellen, und Bit 8, 17 und die Bits 29 und 30 eine Sensortyp-ID. Bit 31 stellt einen sogenannten Unique Protokoll Killer dar. Dieses Bit ist immer Null und verhindert, dass das hier verwendete spezialisierte TAG-Protokoll mit dem Standard Unique Protokoll verwechselt werden kann, weil beim Standard Unique Protokoll die ersten neun Bits immer Eins sind. Die verbleibenden Bits 9-16 und 18-28 stehen für die sensorspezifische-ID zur Verfügung, was bedeutet, dass hierfür 524288 Zahlen zur Verfügung stehen. Dies stellt auch einen Manipulationsschutz dar. Dies deshalb, weil je mehr Zahlen dargestellt werden können, es umso unwahrscheinlicher ist, dass die selbe Zahl ein systemfremder RFID-Sender aufweist.

Die Verteilung der Sensortyp-ID auf die Bits 8,17, 29 und 30 stellen eine Verschlüsselung dieser Information dar, weil von aussen nicht ohne besondere Kenntnisse des Systems ersichtlich ist, wie die Bits über den vierten Datensatz 105 verteilt sind.

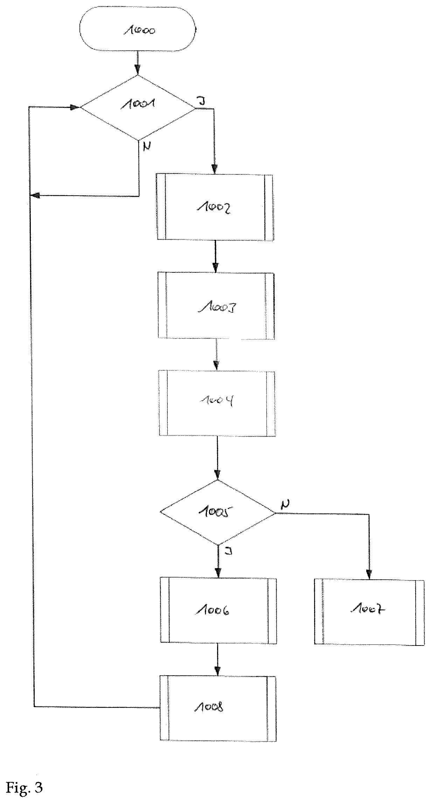

Die Figur 3 zeigt einen Ablauf für ein erfindungsgemässes Verfahren. Hierbei wird nach dem Start 1000 geprüft, ob ein RFID-Sender 1 im Empfangsbereich des RFID-Empfängers anwesend ist oder nicht. Diese Prüfung 1001 wird solange durchgeführt, bis das System abgeschaltet wird oder bis die Prüfung 1001 ergibt, dass ein RFID-Sender 1 anwesend ist. Sobald dies der Fall ist, frägt der RFID-Empfänger 2 die Identifikationsnummer 100 des RFID-Senders 1 im Schritt 1002 ab. Die Identifikationsnummer 100 ist im ersten Datensatz 101 des im RFID-Sender 1 hinterlegten RFID-Protokolls abgelegt. Im anschliessenden Schritt 1003 wird der vierte Datensatz 105 abgefragt und die senderspezifischen Daten 200, 300, 400, 500 werden in den RFID-Empfänger 2 bzw. jeweils in die Datenverarbeitungseinheit 4 und 5 eingelesen, wobei jede der beiden Datenverarbeitungseinheiten 4, 5 das Verfahren simultan und unabhängig voneinander abwickeln. Aus den eingelesenen Daten, d.h. vorzugsweise aus der Identifikationsnummer 100 und den senderspezifischen Daten 200, 300, 400, 500 gemeinsam wird ein Prüfwert berechnet (Berechnungsschritt 1004) und bei richtigem Ergebnis werden die eingelesenen Daten als plausibel eingestuft und zur weiteren Verarbeitung (1006) weitergegeben. Bei der Verarbeitung (1006) werden Steuerinformationen für das Sicherheitskontrollgerät (10) erzeugt und diese Steuerinformationen werden dann an das Sicherheitskontrollgerät (10) weitergleitet (1008).

Der RFID-Empfänger bzw. die Datenverarbeitungseinheiten 4, 5 können so ausgestaltet sein, dass jeweils das Einlesen 1003 der senderspezifischen Daten 200, 300, 400, 500 in den RFID-Empfänger 2 die zuvor im RFID-Empfänger 2 eingelesene Identifikationsnummer 100 überschreibt. Bevor nun die Verarbeitung 1006 der eingelesenen senderspezifischen Daten 200, 300, 400, 500 beginnt, kann geprüft werden, ob eine Änderung des Speicherinhaltes des RFID-Empfängers stattgefunden hat und wenn die Prüfung ergibt, dass dies nicht der Fall ist, wird eine Fehlermeldung, insbesondere an des Sicherheitskontrollgerät ausgegeben.

Der Ablauf beginnt nun wieder von vorne, d.h. es wird geprüft, ob ein RFID-Sender 1 im Empfangsbereich des RFID-Empfängers anwesend ist oder nicht. Ergibt die Plausibilitätsprüfung 1005, dass die eingelesenen Daten nicht plausibel sind, wird eine Fehlermeldung 1007 ausgegeben.

### BEZUGSZEICHENLISTE:

- 1: RFID-Sender
- 2: RFID-Empfänger
- 4: Erste Datenverarbeitungseinheit
- 5: Zweite Datenverarbeitungseinheit
- 6, 6': Erste Übertragungswege
- 7: Verbindung
- 8: Zweiter Übertragungsweg
- 9: Dritter Übertragungsweg
- 10: Sicherheitskontrollgerät
- 100: Identifikationsnummer
- 101 bis 108: Datensätze
- 200: Sendertyp-ID
- 300: Sensorspezifische-ID
- 400: RFID-protokollspezifische Information
- 500: Prüfwert (CRC)
- 1000: Start
- 1001: Anwesenheitsprüfung
- 1002: Abfrage Identifikationsnummer
- 1003: Abfrage Senderspezifische Daten
- 1004: Berechnung Prüfwert
- 1005: Plausibilitätsprüfung
- 1006: Verarbeitung
- 1007: Fehlermeldung
- 1008: Weiterleitung

## Patentansprüche

1. Verfahren zur Übermittlung von Daten von einem RFID-Sender (1) zu einem RFID-Empfänger (2), wobei der RFID-Empfänger (2) wiederholt überprüft, ob sich der RFID-Sender (1) in seinem Empfangsbereich befindet und Steuerinformationen an ein Sicherheitskontrollgerät (10) weitergibt,
**gekennzeichnet durch**
folgende Schritte, die ausgeführt werden, wenn das Prüfen (1001) ergibt, dass sich ein RFID-Sender (1) im Empfangsbereich des RFID-Empfängers (2) befindet:
- Einlesen (1002) einer Identifikationsnummer (100) aus dem RFID-Sender in den RFID-Empfänger,
- Einlesen (1003) von senderspezifische Daten (200, 300, 400, 500) aus dem RFID-Sender in den RFID-Empfänger,
- Verarbeitung (1006) der eingelesenen senderspezifische Daten (200, 300, 400, 500).

2. Verfahren zur Übermittlung Daten nach Anspruch 1,
**dadurch gekennzeichnet,**
**dass** das Einlesen (1003) der senderspezifischen Daten (200, 300, 400, 500) in den RFID-Empfänger die zuvor im RFID-Empfänger eingelesene Identifikationsnummer (100) überschreibt, wobei vorzugsweise vor der Verarbeitung (1006) der eingelesenen senderspezifischen Daten (200, 300, 400, 500) geprüft wird, ob eine Änderung des Speicherinhaltes stattgefunden hat und wenn die Prüfung ergibt, dass dies nicht der Fall ist, eine Fehlermeldung ausgegeben wird.

3. Verfahren zur Übermittlung von Daten nach Anspruch 1 oder 2 mit einem RFID Protokoll, welches mehrere, insbesondere acht, Datensätze (101 bis 108) aufweist, wobei der erste Datensatz (101) die Identifikationsnummer (100) enthält, **dadurch gekennzeichnet,**
**dass** in einem weiteren Datensatz, vorzugsweise dem vierten Datensatz (105), die senderspezifischen Daten (200, 300, 400, 500) abgelegt werden und
**dass** abwechselnd die Identifikationsnummer (100) und die senderspezifischen Daten (200, 300, 400, 500) aus dem RFID-Sender (1) in den RIFD-Empfänger eingelesen werden, wobei zur Berechnung eines Prüfwerts (500) für die zyklische Redundanzprüfung die senderspezifischen Daten (200, 300, 400, 500) und die Identifikationsnummer (100) verwendet werden.

4. Verfahren zur Übermittlung von Daten nach einem der vorigen Ansprüche,
**dadurch gekennzeichnet**,
die senderspezifischen Daten (200, 300, 400, 500) an wenigstens zwei voneinander unabhängige Datenverarbeitungseinheiten (4, 5) übergeben werden, und jede dieser Datenverarbeitungseinheiten (4, 5) für sich eigenständig die Plausibilität der senderspezifischen Daten (200, 300, 400, 500) prüft und in der Folge verarbeitet, wobei vorzugsweise die Ergebnisse der Plausibilitätsprüfungen (1005) der beiden Datenverarbeitungseinheiten (4, 5) miteinander verglichen werden und dass bei fehlender Übereinstimmung eine Fehlermeldung (1007) an das Sicherheitskontrollgerät (10) ausgegeben wird, wobei die Ergebnisse der Plausibilitätsprüfungen (1005) der beiden Datenverarbeitungseinheiten (4, 5) vorzugsweise miteinander verglichen werden und dass bei Übereinstimmung die senderspezifischen Daten (200, 300, 400, 500) verarbeitet werden, um Steuerinformationen für das Sicherheitskontrollgerät zu erzeugen.

5. System mit einem Sicherheitssensor und einem Sicherheitskontrollgerät (10), wobei der Sicherheitssensor einen RFID-Empfänger (2) zur Detektion eines RFID-Senders (1) umfasst und der RFID-Empfänger (2) wenigstens eine Datenverarbeitungseinheit (4, 5) aufweist,
**dadurch gekennzeichnet,**
**dass** in einem Speicher des RFID-Senders (10) eine Identifikationsnummer des RFID-Senders (10) und senderspezifische Daten (200, 300, 400, 500) abgelegt sind, wobei der RFID-Empfänger (2) oder die Datenverarbeitungseinheit (4, 5) dazu ausgelegt ist, abwechselnd zuerst die Identifikationsnummer (100) und dann die senderspezifische Daten (200, 300, 400, 500) abzufragen und diese abwechselnd im selben Speicherplatz des RFID-Empfängers (2) oder der Datenverarbeitungseinheit (4, 5) zu speichern.

6. System nach Anspruch 5,
**dadurch gekennzeichnet,**
**dass** die Identifikationsnummer (100) und die senderspezifischen Daten (200, 300, 400, 500) Basis zur Berechnung (1004) eines Prüfwerts (500) für eine zyklische Redundanzprüfung sind.

7. System nach Anspruch 5 oder 6 zur Übertragung von Daten mit einem RFID Protokoll, welches mehrere, insbesondere acht, Datensätze (101 bis 108) aufweist, wobei der erste Datensatz (101) die Identifikationsnummer (100) enthält,
**dadurch gekennzeichnet,**
**dass** nur in einem weiteren Datensatz, vorzugsweise dem vierten Datensatz (105), die senderspezifischen Daten (200, 300, 400, 500) abgelegt sind.

8. System nach Anspruch 5, 6 oder 7,
**dadurch gekennzeichnet,**
**dass** die senderspezifischen Daten (200, 300, 400, 500) des weiteren Datensatzes (105) aus einer Bitfolge gebildet sind, mit einem ersten Bereich für den Prüfwert (500),
einem zweiten Bereich für Senderidentitätsdaten (200, 300) und
einem dritten Bereich für RFID-protokollspezifischen Informationen (400).

9. System nach Anspruch 7 oder 8,
**dadurch gekennzeichnet,**
**dass** die Senderidentitätsdaten im zweiten Bereich eine Sendertyp-ID (200) und eine senderspezifische-ID (300) enthalten, wobei die Sendertyp-ID (200) eine erste Anzahl von Bits und die Senderspezifische-ID (300) einen zweite Anzahl von Bits aufweist, wobei die Bits der beiden IDs (200, 300) derart über den zweiten Bereich verteilt sind, dass neben einem Bit der Sendertyp-ID (200) wenigstens ein Bit der Senderspezifischen-ID (300) oder des ersten oder dritten Bereichs liegt, wobei die Verteilung der Bits über den zweiten Bereich vorzugsweise von Zeit zu Zeit oder anlagenspezifisch veränderbar ist.

10. Sicherheitssensor, wobei der Sicherheitssensor einen RFID-Empfänger (2) mit einer Datenverarbeitungseinheit (4, 5) zum Einlesen der in einem Speicher eines RFID-Senders gespeicherten Daten (200, 300, 400, 500) aufweist,
**dadurch gekennzeichnet,**
**dass** im Speicher des RFID-Senders eine Identifikationsnummer des RFID-Senders und senderspezifische Daten (200, 300, 400, 500) abgelegt sind, wobei der RFID-Empfänger oder die Datenverarbeitungseinheit (4, 5) dazu ausgelegt ist, abwechselnd zuerst die Identifikationsnummer und dann die senderspezifischen Daten (200, 300, 400, 500) einzulesen und diese abwechselnd im selben Speicherplatz des RFID-Empfängers (2) oder der Datenverarbeitungseinheit (4, 5) zu speichern.

11. Sicherheitssensor nach Anspruch 10,
**dadurch gekennzeichnet,**
**dass** die senderspezifischen Daten (200, 300, 400, 500) von wenigstens zwei voneinander unabhängigen Datenverarbeitungseinheiten (4, 5) eingelesen werden, und jede dieser Datenverarbeitungseinheiten (4, 5) für sich eigenständig die Plausibilität der senderspezifischen Daten (200, 300, 400, 500) prüft.

12. Sicherheitssensor nach Anspruch 10 oder 11,
**dadurch gekennzeichnet,**
**dass** die Identifikationsnummer (100) und die senderspezifischen Daten (200, 300, 400, 500) Basis zur Berechnung eines Prüfwerts (500) für eine zyklische Redundanzprüfung sind.

13. Sicherheitssensor nach Anspruch 10, 11 oder 12, der dazu ausgelegt ist, Daten mit einem RFID Protokoll zu empfangen, wobei das RFID Protokoll mehrere, insbesondere acht, Datensätze (101 bis 108) aufweist, wobei der erste Datensatz (101) die Identifikationsnummer (100) enthält,
**dadurch gekennzeichnet,**
**dass** in einem weiteren Datensatz, vorzugsweise dem vierten Datensatz (105), die senderspezifische Daten (200, 300, 400, 500) abgelegt sind.

14. Sicherheitssensor nach einem der Ansprüche 10 bis 13,
**dadurch gekennzeichnet**,
die senderspezifischen Daten (200, 300, 400, 500) des weiteren Datensatzes (105) aus einer Bitfolge gebildet sind, mit einem ersten Bereich für den Prüfwert (500), einem zweiten Bereich für Senderidentitätsdaten (200, 300) und
einem dritten Bereich für RFID-protokollspezifische Informationen (400), wobei der erste Bereich vorzugsweise 8 Bits, der zweite Bereich vorzugsweise 23 Bits und der dritte Bereich 1 Bit umfasst.

15. Sicherheitssensor nach Anspruch 14,
**dadurch gekennzeichnet,**
**dass** die Senderidentitätsdaten (200,300) im zweiten Bereich eine Sensortyp-ID (200) und eine sensorspezifische-ID (300) enthalten, wobei die Sensortyp-ID (200) eine erste Anzahl von Bits und die sensorspezifische-ID (300) einen zweite Anzahl von Bits aufweist, wobei die Bits der beiden IDs (200, 300) derart über den zweiten Bereich verteilt sind, dass neben einem Bit der Sensortyp-ID (200) wenigstens ein Bit der sensorspezifischen ID (300) oder des ersten oder dritten Bereichs liegt, wobei vorzugsweise die Verteilung der Bits über den zweiten Bereich von Zeit zu Zeit oder anlagenspezifisch veränderbar ist.
